# EUROPÄISCHE PATENTANMELDUNG

(11) **EP 1 203 939 A1**
(43) Veröffentlichungstag der Anmeldung: **08.05.2002**
(21) Anmeldenummer: 01124196.5
(22) Anmeldetag: 11.10.2001
(51) Int. Cl.: G01M 17/007, B60T 17/22

(54) **Aktuator zur Betätigung der Fusspedale eines Kraftfahrzeuges**

(30) Priorität: 03.11.2000 DE 10054569
(71) Anmelder: Stähle, Kurt, 75242 Neuhausen-Steinegg (DE)
(72) Erfinder: Stähle, Kurt, 75242 Neuhausen-Steinegg (DE)
(74) Vertreter: Frank, Gerhard, Dipl.-Phys.

(57) **Zusammenfassung**

Ein Aktuator zur Betätigung der Fußpedale eines Kraftfahrzeuges mit Hilfe eines Stellmotors weist zwei Betätigungsarme (20, 30) auf, die alternativ durch Wahl der Drehrichtung eines gemeinsamen Stellmotors (10) betätigbar sind. Hierzu sind vorteilhafterweise erste und zweite Kopplungselemente in Form jeweils eines Exzenters und eines radial von der Motorwelle abstehenden Zapfens vorgesehen, die diese alternative Beaufschlagung jeweils eines Betätigungsarmes bewirken.

Damit kann wahlweise entweder das Brems- oder das Gaspedal eines Kraftfahrzeuges mit einer gemeinsamen Vorrichtung betätigt werden, die nur minimale Platzanforderungen stellt und kostengünstig ist.

## Beschreibung

### Technischer Hintergrund der Erfindung

Bei Funktions- und Dauertests der Einrichtungen eines Kraftfahrzeuges ist es üblich, die Pedal- und Lenkradbewegungen durch entsprechende Roboter vornehmen zu lassen, so dass Bewegungsabläufe bei diesen Einrichtungen erzeugt werden, die den tatsächlichen Abläufen bei der Bedienung des Kraftfahrzeugs weitgehend entsprechen. Solche Vorrichtungen bestehen aus der Regel aus Gestellen mit hebelähnlich aneinander gelenkten Armen, die diese typischen Bewegungen erzeugen, und den eigentlichen Betätigungselementen, die das jeweilige Bedienelement, beispielsweise das Gaspedal beaufschlagen und den gewünschten Bewegungsablauf erzeugen.

Einrichtungen zur Betätigung mindestens eines Fußpedals, entweder des Gaspedals oder des Bremspedals, sind aus der DE 39 40 588 A1 oder der EP 0 235 333 B1 bekannt, die die Anordnung eines Fahrroboters auf dem Fahrersitz beschreiben. Zur Betätigung der Pedale sind hierbei hyraulisch oder pneumatisch arbeitende Betätigungselemente vorgesehen, die eine feste Verankerung und Abstützung benötigen.

Im Fußraum des Kraftfahrzeuges steht nur ein begrenzter Platz zur Verfügung, um die Antriebs- und Betätigungseinrichtungen zur automatischen Betätigung des Gaspedals, des Bremspedals und des Kupplungspedals durchzuführen, so dass der zur Verfügung stehende Raum optimal ausgenutzt werden muss.

### Darstellung der Erfindung

Es ist das wesentliche Ziel der Erfindung, einen Aktuator zu schaffen, der wahlweise entweder das Brems- oder das Gaspedal eines Kraftfahrzeuges betätigen kann, nur minimale Platzanforderungen stellt und kostengünstig ist.

Erfindungsgemäß wird diese Aufgabe gemäß den Merkmalen des Patentanspruchs 1 gelöst.

Der Grundgedanke der Erfindung ist daher darin zu sehen, dass je nach der Wahl der Drehrichtung des Stellmotors entweder ein Betätigungsarm für das Gaspedal oder ein Betätigungsarm für das Bremspedal aktiviert wird, wodurch man mit einem einzigen gemeinsamen Stellmotor auskommt.

Gemäß vorteilhaften Ausgestaltungen der Erfindung sind erste und zweite Kopplungselemente in Form jeweils eines Exzenters und eines radial von der Motorwelle abstehenden Zapfens realisiert, die diese alternative Beaufschlagung jeweils eines Betätigungsarmes bewirken.

Weitere vorteilhafte Ausgestaltungen der Erfindung sind weiteren Unteransprüchen zu entnehmen.

### Kurze Beschreibung der Zeichnungen

Ein bevorzugtes Ausführungsbeispiel der Erfindung wird nun anhand von Figuren näher erläutert, es zeigen:
- Figuren 1-3:: Perspektivische Prinzipdarstellungen des Aktuators aus drei Blickrichtungen,
- Figuren 4-8:: Detaildarstellungen des Aktuators in der Grundstellung,
- Figuren 9-13:: Detaildarstellungen des Aktuators in der Vollbremsstellung,
- Figuren 14-18:: Detaildarstellungen des Aktuators in der Vollgasstellung,
- Figuren 19 und 20:: perspektivische Darstellungen eines Aktuators mit einer Pedaleinrichtung, und
- Figuren 21 und 22:: Teildarstellungen des Aktuators mit einem zugeordneten Kupplungsaktuator.

### Beschreibung eines bevorzugten Ausführungsbeispiels

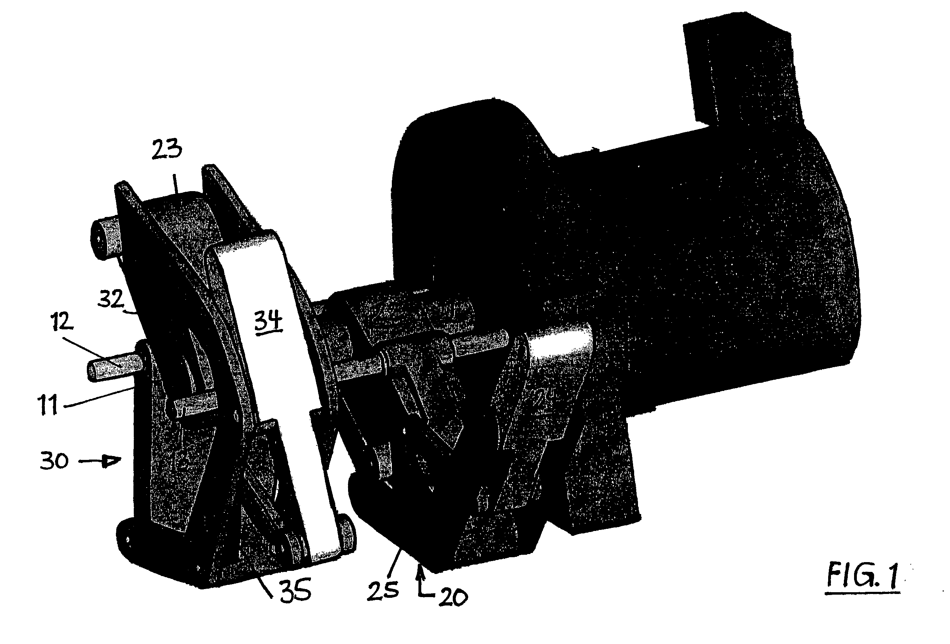

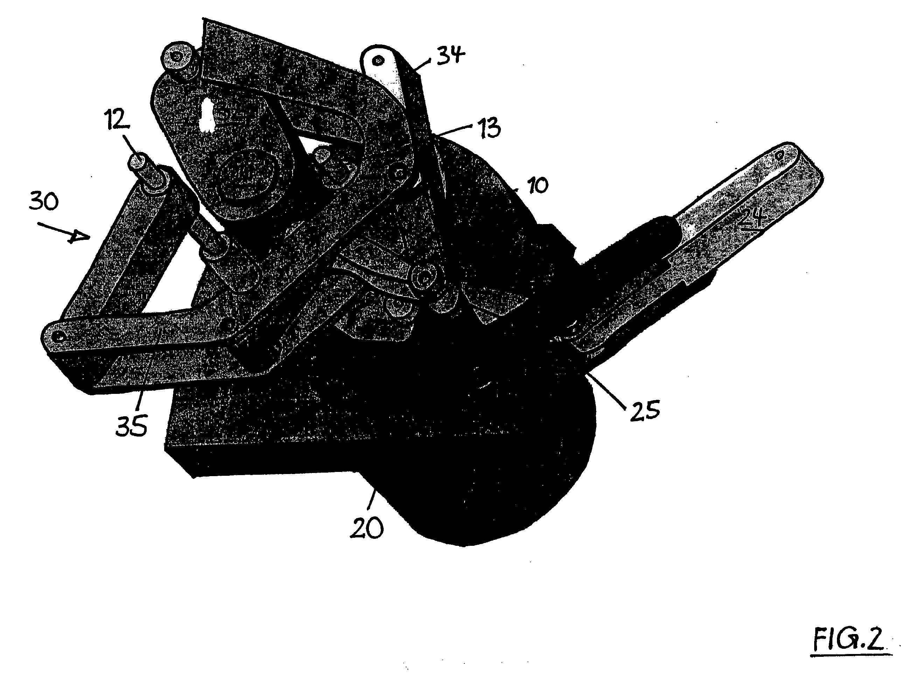

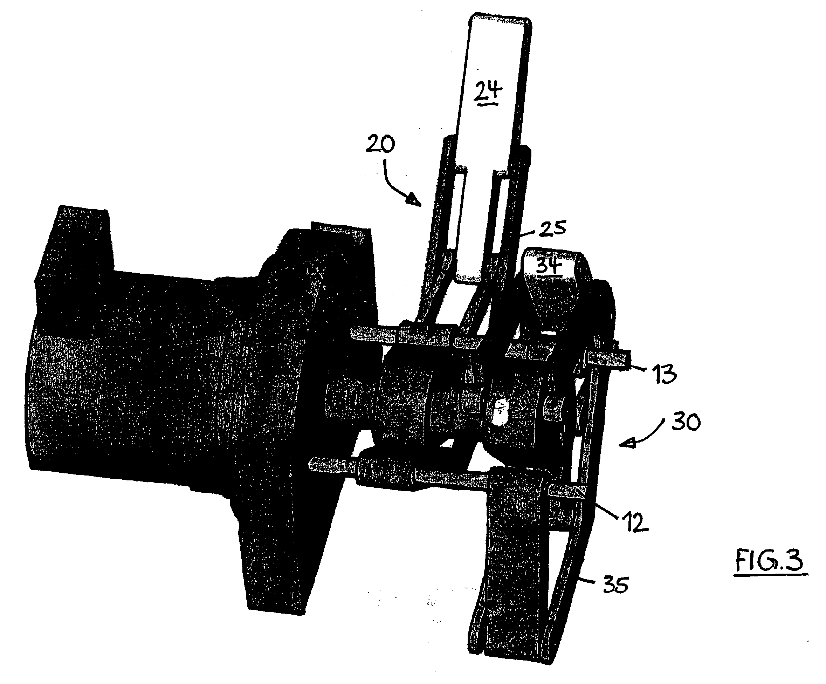

Der Grundaufbau des erfindungsgemäßen Aktuators ist aus den Figuren 1 bis 3 ersichtlich, die den Aktuator in perspektivischen Darstellungen aus drei verschiedenen Blickrichtungen darstellen. Dargestellt ist die Vollbremsposition, bei der ein erster Betätigungsarm 25 mit einem Betätigungselement 24 für ein erstes Fußpedal sich in seiner Betätigungsposition befindet, wogegen ein zweiter Betätigungsarm 30 mit einem Betätigungselement 34 in der nicht aktivierten Position liegt. Die Betätigungsarme 20 und 30 sind jeweils an ersten Schwenkachse 12 und einer zweiten Schwenkachse 13 angelenkt, die parallel zu einer Motorwelle 11 in einer Halteplatte eines Gehäuses eines Stellmotors 10 befestigt sind. In den Figuren 1 bis 3 sind lediglich die konstruktiv wesentlichen Teile dargestellt, d.h. diejenigen Teile, die zur Durchführung der Stellbewegungen erforderlich sind, nicht jedoch solche Teile, die aus konstruktiven Gründen zur mechanischen Verstärkung oder Optimierung des mechanischen Aufbaus erforderlich sind. Solche Teile können je nach Auslegung des Aktuators variieren und sind nicht Gegenstand der Erfindung.

Auf der Motorwelle 11 sitzen als erstes Kopplungselement zwei Exzenter oder Exzenternocken 22 und 32, die bei Drehung der Motorwelle 11 durch den Stellmotor 10 derart beaufschlagt werden, dass sie eine Kraftkopplung mit dem zugeordneten Betätigungsarm 20 bzw. 30 in dem Sinne bewirken, dass eine Verschwenkung des Exzenters 22,32 zu einem Ausschwenken des zugeordneten Betätigungsarms 20,30 führt. Dabei ist deren Formgebung und ihre Anlenkung an den ersten und zweiten Schwenkachsen 12 und 13 so definiert, dass durch die Drehbewegung der Exzenter 22,32 die zur Betätigung des jeweils zugeordneten Fußpedals erforderliche Schwenkbewegung des Betätigungselements 24 bzw. 34 ausgeführt wird.

Hierbei besteht der Grundgedanke der Erfindung darin, dass die Ankopplung der Exzenter 22,32 an die Motorwelle 11 von der Drehrichtung des Stellmotors 10 abhängt; hierbei befindet sich die Motorwelle bzw. der Stellmotor in einer Neutralposition, von der aus entweder eine Drehung nach rechts (Uhrzeigersinn) oder nach links (entgegen dem Uhrzeigersinn) erfolgt, je nachdem, welche der Betätigungselemente 24 oder 34 die Stellbewegung zur Betätigung des ihr zugeordneten Fußpedals ausführen soll.

Um dies zu erreichen ist als ein weiteres, zweites Kopplungselement jeweils ein radial von der Motorwelle 11 abstehender Zapfen 21,31 vorgesehen, der mit einem in verschiedener Drehrichtung relativ zum Zapfen im zugeordneten Exzenter 22 oder 32 angebrachten Anschlag 22A,32A zusammenwirkt, dergestalt, dass bei Drehung in der ersten Drehrichtung der erste Zapfen 21 den Anschlag 22A im Exzenter 22 beaufschlagt, der zweite Zapfen 31 im Exzenter 32 jedoch von seinem zugeordneten Anschlag 32A weg in einen Zwischenraum bewegt wird, in dem die Drehung des zweiten Zapfens 31 erfolgen kann, ohne dessen zugeordneten Exzenter 32 als zugehöriges zweites Kopplungselement zu beaufschlagen.

Entsprechend führt eine Drehung der Motorwelle 11 entgegen der Uhrzeigerrichtung aus der Neutralposition dazu, dass nun der zweite Zapfen 31 seinen zugeordneten Anschlag 32A im Exzenter 32 als zweiten Kopplungselement beaufschlagt und demzufolge zum Ausfahren des zweiten Betätigungsarms 30 und des zugeordneten Betätigungselements 34 zur Stellbewegung auf dem zweiten Fußpedal führt.

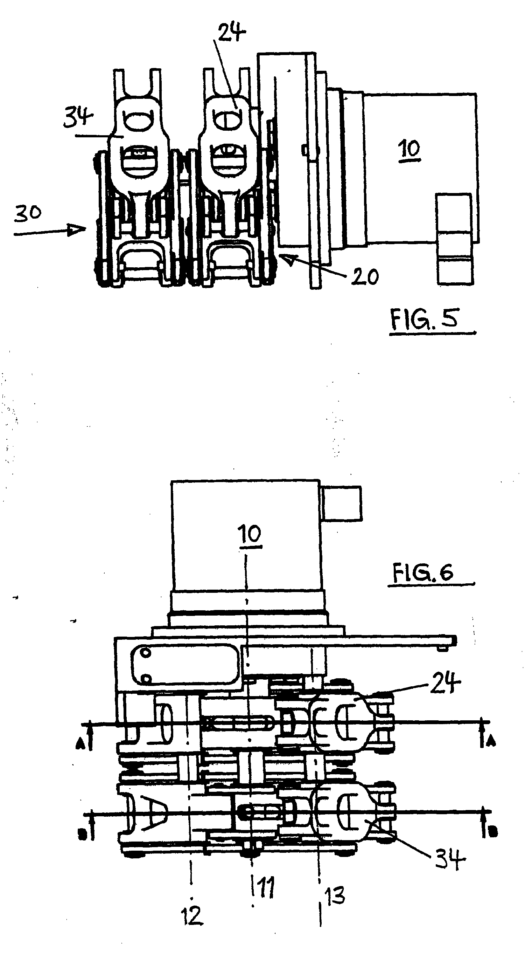

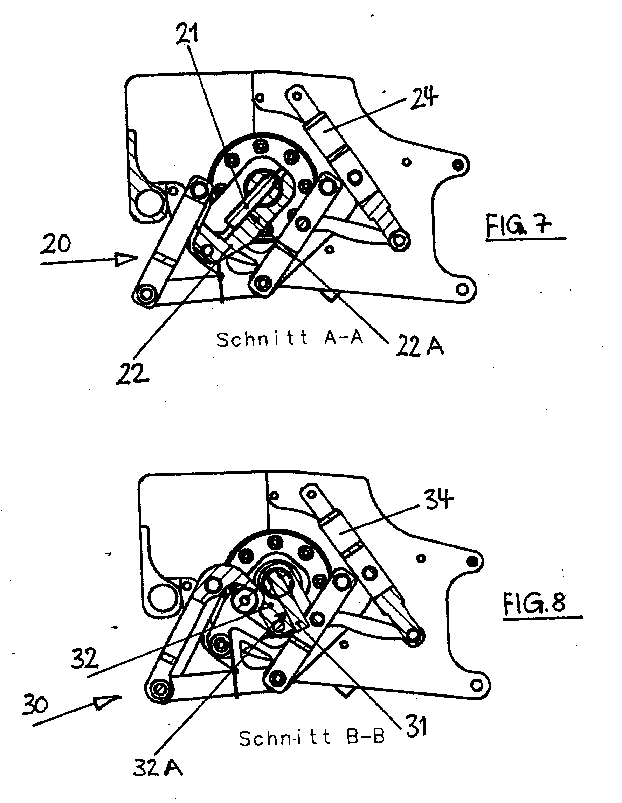

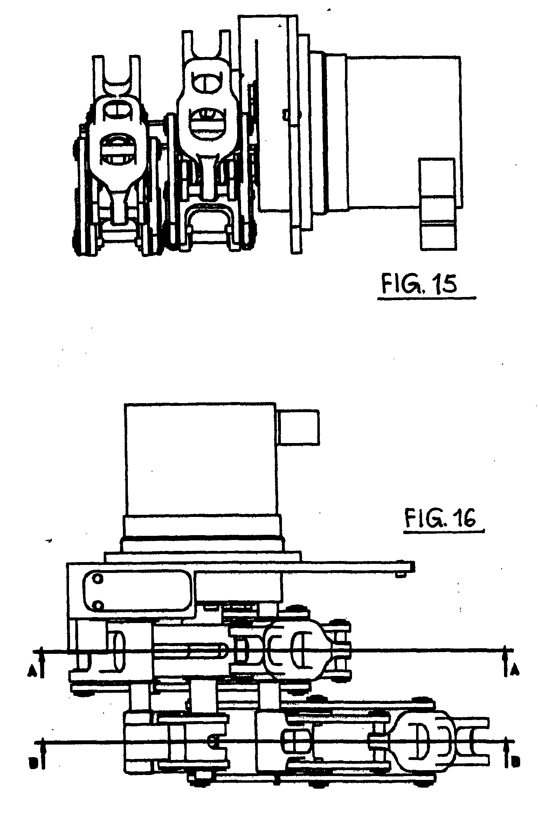

Die Einzelheiten dieser Kopplung in den einzelnen Betriebspositionen des Aktuators sind in den Figuren 7,8; 12,13 und 17,18 schematisch skizziert, die jeweils den in den Figuren 6,11 und 16 dargestellten Schnitt A-A bzw. B-B durch die Betätigungsebene des ersten Betätigungsarmes 20 und des zweiten Betätigungsarmes 30 darstellen.

Zu beachten hierbei ist, dass Formgebung und Anlenkung der beiden Betätigungsarme 20 und 30 an den Schwenkachsen unterschiedlich gewählt sind, da die gegensinnige Bewegung der beiden Exzenter 22 und 32 zu einer gleichgerichteten Bewegung des zugeordneten Betätigungselements 24 bzw. 34 führen muss, um die entsprechend gleichgerichtete Bewegung zur Betätigung der beiden Fußpedale P1 und P2 zu erzielen. Hierzu dienen nicht nur die Kniehebel 25 und 35, sondern auch die aus den Zeichnungen ersichtlichen Zwischenstücke und Gelenkarme, über die die Kniehebel 25 und 35 und auch die Betätigungselemente 24 und 34 an den Schwenkachsen 12 und 13 angelenkt sind.

Das Zusammenwirken der einzelnen Bauteile wird nun anhand eines Bewegungsablaufs mit nacheinander erfolgender Aktivierung der beiden Betätigungselemente 24 und 34 erläutert werden:

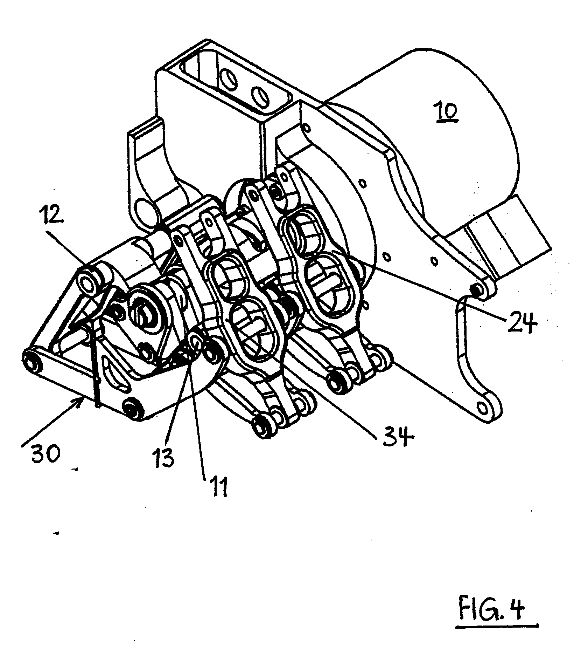

Ausgangspunkt ist die in den Figuren 4 bis 8 gezeigte Neutralstellung des Aktuators, in der die beiden Zapfen 21 (Figur 7) und 31 (Figur 8) auf der Motorwelle 11 sich jeweils auf verschiedenen Seite ihres zugeordneten Anschlags 22A,32A befinden und die beiden Betätigungselemente 24 und 34 ihre Neutralstellung einnehmen, wie dies für das Betätigungselement 34 auch in den Figuren 1 bis 3 dargestellt ist.

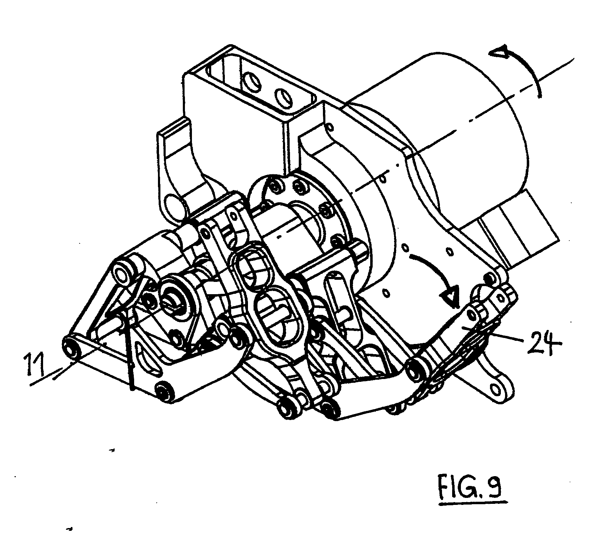

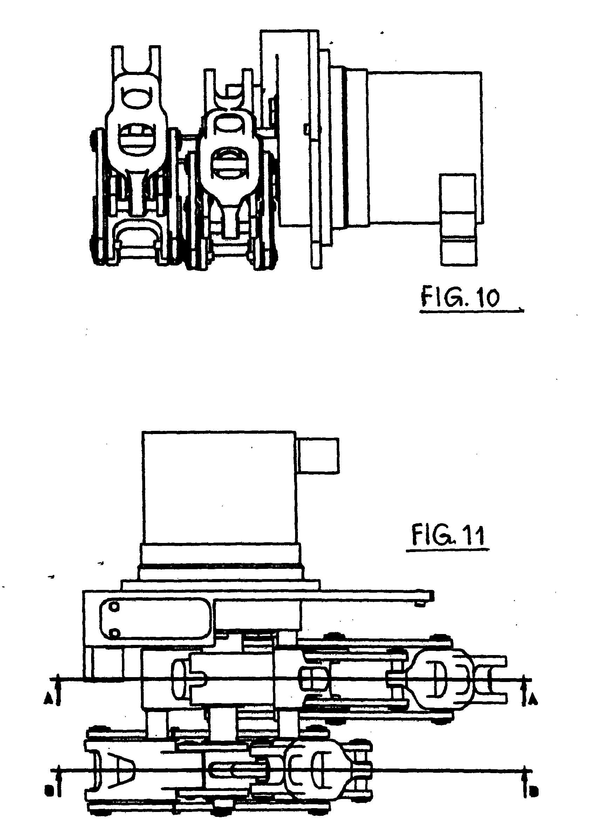

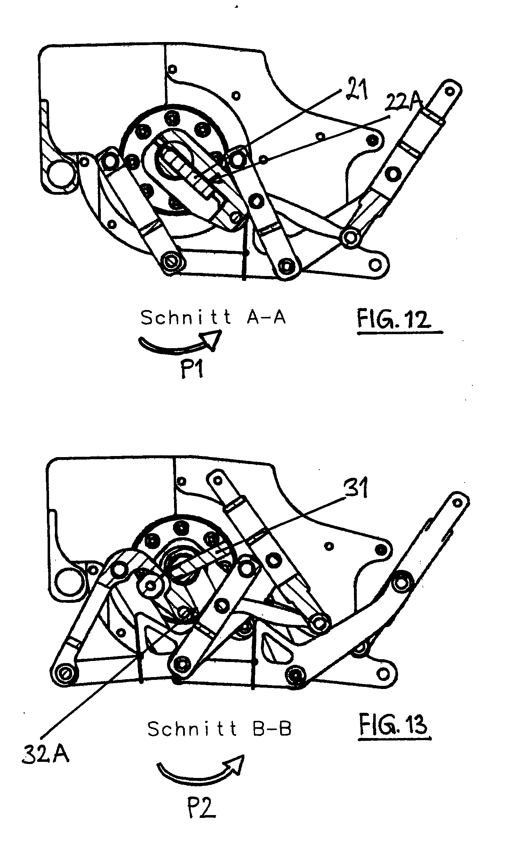

Erfolgt eine Drehung des Stellmotors 10 entgegen dem Uhrzeigersinn, so beaufschlagt der erste Zapfen 21 seinen zugeordneten Anschlag 22A im Exzenter 22 Pfeil. P1, Figur 12), worauf dieser verschwenkt und den ersten Betätigungsarm 20 aus der Neutralstellung in die in Figur 1 und den Figuren 9 bis 13 dargestellte Vollbremsstellung ausfährt, also den Betätigungsvorgang durchführt, aufgrund dessen das Bremspedal betätigt wird, abhängig vom Drehwinkel des Stellmotors 10 bzw. der Motorwelle 11. Bei dieser Stellbewegung wird eine (nicht dargestellte) Rückholfeder gespannt. Bei dieser Bewegung entgegen dem Uhrzeigersinn (Pfeil P2 in Figur 13) bewegt sich der zweite Zapfen 31 von seinem zugeordneten Anschlag 32A weg und beaufschlagt demnach nicht "seinen" Exzenter 32, der zweite Betätigungsarm 30 bleibt folglich in seiner Neutralposition, wie auch in Figur 1 bis 3 dargestellt.

Wenn dieser Betätigungsvorgang (Bremsung) abgeschlossen ist, dreht der Stellmotor 10 bzw. die Motorwelle 11 im Uhrzeigersinn wieder in ihre Neutralstellung, d.h., der erste Zapfen 21 bewegt sich von seinem zugeordneten Anschlag 22A (Figur 12) weg, worauf das erste Betätigungselement 24 unter der Wirkung ihrer zugeordneten Rückholfeder wieder in ihre Neutralstellung zurückgefahren wird, und somit die in den Figuren 4 bis 8 gezeigte Neutralstellung des Aktuators erreicht wird.

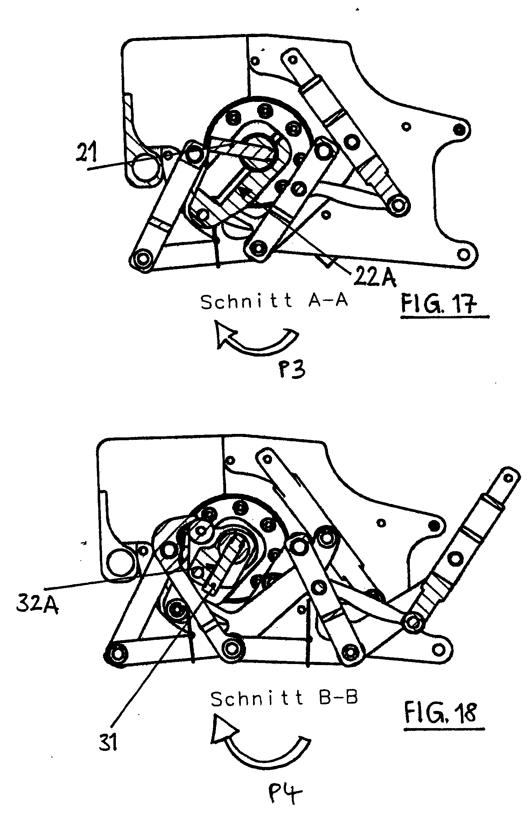

Erfolgt eine Drehung der Welle 11 im Uhrzeigersinn (Pfeile P3 und P4 in Figur 17,18), so greift der zweite Zapfen 31 an seinem zugeordneten Anschlag 32A des Exzenters 32 an und derselbe Vorgang wird für den zweiten Betätigungsarm 30 durchgeführt, d.h., das zweite Betätigungselement 34 fährt nun unter Spannung ihrer zugeordneten Rückholfeder aus und betätigt das Gaspedal, wogegen erste Zapfen 21 von "seinem" Anschlag 22A wegdreht und der erste Betätigungsarm 20 in seiner Neutralstellung verbleibt. Auch hier erfolgt nach Rückfahren des Motors 10 bzw. der Motorwelle 11 in die Neutralstellung durch die Rückholfeder 33 die Rückholung des Betätigungselements 34 bzw, des zweiten Betätigungsarms 30 in die in den Figuren 4 bis 8 dargestellte Neutralstellung des Aktuators.

In den Figuren 1 bis 18 ist lediglich der Aktuator selbst dargestellt, d.h. also eine Vorrichtung, die durch ihre Betätigungselemente 24,34 eine Stellbewegung erzeugt, die in ihrer Geometrie und ihrem kinematischen Ablauf etwa dem Betätigungsverlauf eines Fußpedals (Gas- oder Bremspedal) eines Kraftfahrzeugs entspricht.

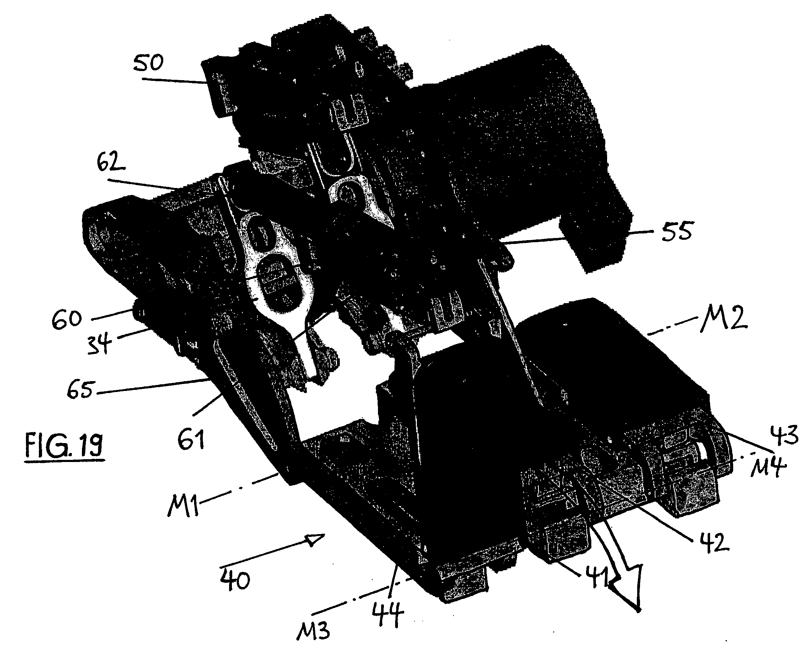

Zwecks einer flexibleren Anpassung an die individuellen Gegebenheiten im Fußraum eines Kraftfahrzeugs zwischen Pedalen und Fahrersitz zeigen die Figuren 19 bis 20 eine Weiterbildung der erfindungsgemäßen Lösung, bei der der Aktuator mit einer Pedaleinrichtung 40 gekoppelt ist, die Pedale 41,42 und 43 aufweist, die dann unmittelbar die entsprechenden zugeordneten Fußpedale des Kraftfahrzeugs beaufschlagen. Diese Pedaleinrichtung 40 besteht aus einer Montageplatte 44, die über Achsen M1-M2 mit Haltearmen 55,65 schwenkbar verbunden ist, wobei die Haltearme 55 und 65 konstruktiv so ausgebildet sind, dass sie beiderseits der beiden Betätigungsarme 20 und 30 am Aktuator befestigt werden können oder durch entsprechend geformte Bauteile des Aktuators selbst wie z.B. Halteplatten gebildet werden.

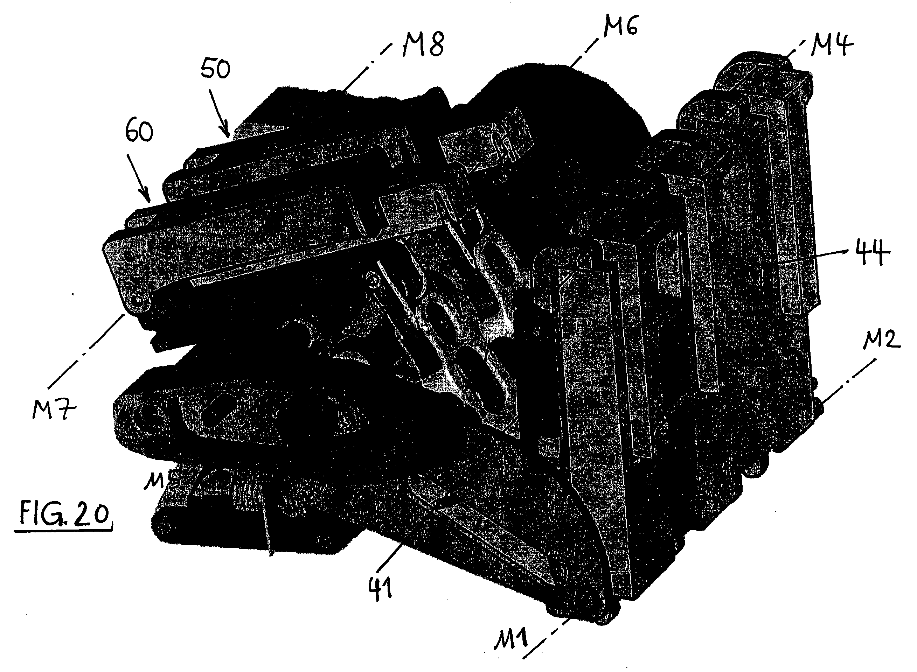

An der Montageplatte 44 sind beim dargestellten Ausführungsbeispiel der Figuren 19 bis 20 die drei Pedale 41,42,43 um eine gemeinsame Achse M3-M4 angelenkt, so dass die Pedale aus einer Ruhestellung (Pedale 42 und 43 in Figur 19) in ihre Betätigungsstellung (Pedal 41 in Figur 19) geklappt werden können. In dieser Betätigungsstellung ist das obere Ende der Pedale mit einem Verbindungselement 50,60 mit dem zugehörigen Betätigungselement 24,34 des Aktuators verbunden. Jedes Verbindungselement 50 und 60 ist zweiteilig ausgebildet derart, dass eine Klappachse M7,M8 (Figur 20) gebildet wird, zusätzlich zu einer Verschwenkachse M5-M6, die durch das obere Ende des zugeordneten Betätigungselements 24,34 verläuft. Die beiden Teile 61 und 62 bzw. 51 und 52 der Verbindungselemente 50,60 sind vorzugsweise auch längenverschiebbar ausgebildet, so dass dadurch die Anfangspositionierung eines Pedals 41,42,43 auf dem ihm zugeordneten Fußpedal des Kraftfahrzeugs vorgebbar ist.

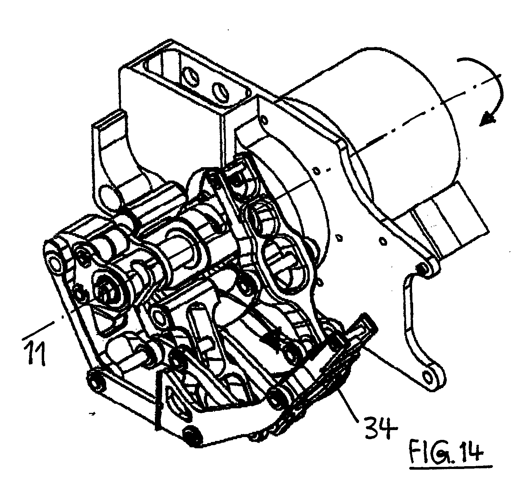

In Figur 19 ist somit das Pedal 41, das zur Betätigung des Gaspedals des Kraftfahrzeugs dient, mittels des Verbindungselementes 60 mit dem oberen Ende des Betätigungselements 34 verbunden, das sich in seiner Neutralposition befindet. Führt nun der Stellmotor 10 die weiter oben beschriebene Stellbewegung durch, so verschwenkt das Betätigungselement 34 in die beispielsweise in Figur 14 dargestellte Position und nimmt über das Verbindungselement 60 das Pedal 41 mit, das nach einer entsprechenden Eichung dann das Gaspedal des Kraftfahrzeuges in der vorgesehenen Weise und Stärke betätigt (Pfeil in Figur 19).

Figur 20 zeigt das Ensemble aus Aktuator und Pedaleinrichtung in seinem kompaktesten Zustand, in dem es insbesondere für den Transport und den Einbau im Kraftfahrzeug-Fußraum optimiert ist.

Sowohl die Verbindungselemente 50,60 als auch die Pedale 41 bis 43 und die gesamte Montageplatte 44 sind über die in Figur 20 dargestellten Achsen zu einer kompakten Einheit zusammen gefaltet, wobei die Verbindungselemente 50 und 60 oberhalb des Aktuators zu liegen kommen und die Montageplatte 44 mit den auf sie geklappten Pedalen 41-43 in etwa senkrechter Position vor dem Aktuator. In dieser Montageposition wird die gesamte Einheit aus Aktuator und Pedaleinrichtung in den Fußraum des Kraftfahrzeuges eingebracht, die Montageplatte 44 wird auf den Boden des Kraftfahrzeuges geklappt, die Pedale 41 bis 43 werden hochgeklappt und die Verbindungselemente 50 und 60 werden auseinander geklappt und ihr vorderes Ende mit dem oberen Ende der zugeordneten Pedale gekoppelt, so dass die in Figur 19 für das Gaspedal dargestellte kraftschlüssige Verbindung zwischen Aktuator einerseits und Pedal 41 andererseits gebildet wird. In Figur 19 ist aus Gründen der zeichnerischen Vereinfachung lediglich die Ankopplung des Pedals 41 für das Gaspedal dargestellt, es ist jedoch ohne weiteres ersichtlich, dass auch durch Hochklappen des Pedals 42 und Herausschwenken des Verbindungselements 50 eine solche kraftschlüssige Verbindung zur Betätigung des Bremspedals hergestellt werden kann, wodurch dann durch die eingangs beschriebene Rotation des Stellmotors 10 im Uhrzeigersinn oder entgegen dem Uhrzeigersinn jeweils entweder das Pedal 41 (für das Gaspedal) oder das Pedal 42 (für das Bremspedal) betätigt wird.

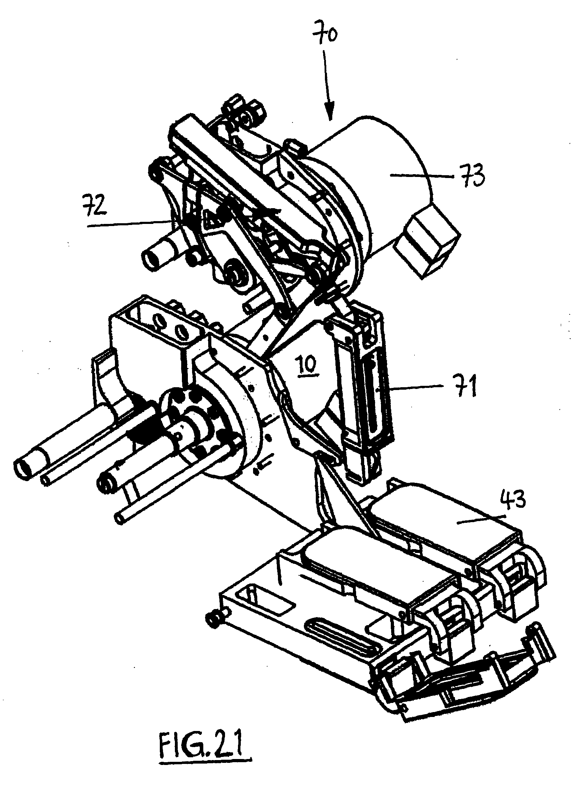

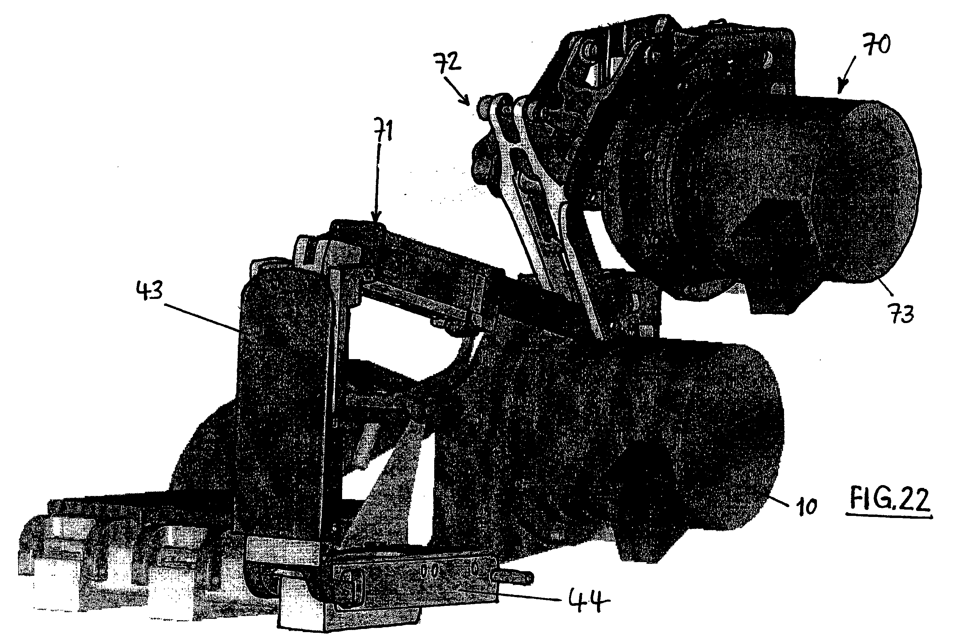

Die in den Figuren 19 bis 22 dargestellte Pedaleinrichtung 40 weist drei Pedale auf, insbesondere auch ein Pedal 43 auf der in Fahrtrichtung gesehenen linken Seite zur Betätigung des Kupplungspedals. Um dies zu ermöglichen, kann der erfindungsgemäße Aktuator zur Betätigung des Gas- und Bremspedals durch einen Kupplungsaktuator 70 ergänzt werden. Der Kupplungsaktuator 70 weist einen Zusatzstellmotor 73 auf, der über ein Betätigungsgestänge 72 ein Verbindungselement 71 beaufschlagt, das im wesentlichen baugleich mit den Verbindungselementen 50 und 60 ausgebildet ist und das nach Einhängen in das Pedal 43 ( Figur 22) über das Betätigungsgestänge 72 das Kupplungspedal beaufschlagen kann. In den Figuren 21 und 22 ist zur Verdeutlichung der oben im einzelnen beschriebene Aktuator nur rudimentär dargestellt, um den Anbau des Kupplungsaktuators 70 zu verdeutlichen.

## Patentansprüche

1. Aktuator zur Betätigung der Fußpedale eines Kraftfahrzeuges mit Hilfe eines Stellmotors,
**dadurch gekennzeichnet, dass** zwei Betätigungsarme (20, 30) alternativ durch Wahl der Drehrichtung eines gemeinsamen Stellmotors (10) betätigbar sind.

2. Aktuator nach Anspruch 1, **dadurch gekennzeichnet, dass** jeder Betätigungsarm (20, 30) aus mindestens zwei Elementen besteht, die um mindestens eine parallel zur Motorwelle (11) angeordnete Schwenkachse (12, 13) derart verschwenkbar sind, dass jeweils ein Betätigungselement (24,34) die zur Betätigung des zugeordneten Fußpedals erforderliche Schwenkbewegung ausführt.

3. Aktuator nach Anspruch 1 und 2, **dadurch gekennzeichnet, dass** jeder Betätigungsarm (20, 30) mittels erster und zweiter Kopplungselemente durch Kraftschluss mit der Motorwelle (11) des Stellmotors (10) aktivierbar ist.

4. Aktuator nach Anspruch 1 - 3, **dadurch gekennzeichnet, dass** die Ankopplung der Betätigungsarme (20, 30) an die Motorwelle (11) über jeweils ein fest an der Motorwelle gehaltenes zweites Kopplungselement erfolgt, wobei eines bei Drehung in der ersten Drehrichtung einen Kraftschluss des ersten Betätigungsarms (20) mit der Motorwelle (11), und das andere bei Drehung in der zweiten Drehrichtung einen Kraftschluss des zweiten Betätigungsarms (30) mit der Motorwelle (11) bewirkt, wobei der jeweils andere Betätigungsarm (30, 20) kräftefrei bleibt.

5. Aktuator nach Anspruch 3, **dadurch gekennzeichnet, dass** der Kraftschluss des zweiten Kopplungselements mit einem Betätigungsarm (20,30) über jeweils ein koaxial zur Motorwelle (11) gehaltenes erstes Kopplungselement erfolgt.

6. Aktuator nach Anspruch1 bis 3, **dadurch gekennzeichnet, dass** das erste Kopplungselement ein Exzenter (22,32) mit einem Hohlraum oder Zwischenraum ist, in den der Zapfen (21,31) eingreift.

7. Aktuator nach Anspruch 1 bis 3, **dadurch gekennzeichnet, dass** das zweite Kopplungselement ein radial von der Motorwelle (11) abstehender Zapfen (21,31) ist.

8. Aktuator nach Anspruch 6 und 7, **dadurch gekennzeichnet, dass** der Hohlraum einen in Drehrichtung des Zapfens (21, 31) liegenden Anschlag (22A, 32A) zur Übertragung des Drehmoments des Stellmotors (10) auf den Exzenter (22, 32) bildet.

9. Aktuator nach Anspruch 4 und Anspruch 8, **dadurch gekennzeichnet, dass** die beiden Anschläge (22A, 32A) für die beiden Zapfen (21, 31) auf bezogen auf die Drehrichtung der Motorwelle (11) unterschiedlichen Seiten der Zapfen (21, 31) liegen.

10. Aktuator nach Anspruch 1 und Anspruch 4, **dadurch gekennzeichnet, dass** eine Neutralstellung vorgesehen ist, von der aus der ausgewählte Betätigungsarm (20, 30) durch Wahl der Drehrichtung der Motorwelle (11) ansteuerbar ist.

11. Aktuator nach Anspruch 9 und 10, **dadurch gekennzeichnet, dass** in der Neutralstellung die beiden Zapfen (21, 31) unmittelbar vor ihrem zugeordneten Anschlag (22A, 32A) positioniert sind.

12. Aktuator nach Anspruch 10 oder 11, **dadurch gekennzeichnet, dass** jeder Betätigungsarm (20, 30) mit einer Rückholfeder ausgestattet ist, die den Betätigungsarm (20, 30) aus seiner Betätigungsposition in die Neutralstellung zurückführt, wenn der Stellmotor (10) seinerseits in seine Neutralstellung zurückfährt.

13. Aktuator nach Anspruch 1 bis 4, **dadurch gekennzeichnet, dass** die Anordnung der Betätigungsarme (20,30) an der Motorwelle (11) so gewählt ist, dass die Stellbewegungen der beiden Betätigungsarme (20,30) auf ihrem zugeordneten Fußpedal im Wesentlichen gleichgerichtet verlaufen.

14. Aktuator nach Anspruch 13, **dadurch gekennzeichnet, dass** die Betätigungsarme (20, 30) ein Betätigungselement (24, 34) zur Beaufschlagung jeweils eines Fußpedals beinhalten.

15. Aktuator nach Anspruch 13, **dadurch gekennzeichnet, dass** die Betätigungsarme (20, 30) einen Kniehebel (25, 35) beinhalten.

16. Aktuator nach Anspruch 2 und 14, **dadurch gekennzeichnet, dass** zwei Schwenkachsen (12, 13) vorgesehen sind, an denen die Betätigungselemente (24, 34) gehalten sind.

17. Aktuator nach Anspruch 1, **dadurch gekennzeichnet, dass** er mit einer Pedaleinrichtung (40) verbunden ist, deren mindestens zwei Pedale (41,42) mit den Betätigungselementen (24,34) über jeweils ein Verbindungselement (50,60) verbunden sind.

18. Aktuator nach Anspruch 17, **dadurch gekennzeichnet, dass** das Verbindungselement (50,60) eine zweiteilige Profilstange ist, die in einer Montageposition über ihrem zugehörigen Betätigungsarm (20,30) zusammenklappbar ist.

19. Aktuator nach Anspruch 17, **dadurch gekennzeichnet, dass** die Pedale (41,42) an ihrem unteren Ende an einer gemeinsamen Montageplatte (44) angelenkt sind, und an ihrem oberen Ende mit dem zugeordneten Verbindungselement (50,60) verbunden sind.

20. Aktuator nach Anspruch 17, **dadurch gekennzeichnet, dass** drei Pedale (41,42,43) vorgesehen sind, einschließlich eines Kupplungspedals (43) für einen Kupplungsaktuator (70).

21. Aktuator nach Anspruch 20, **dadurch gekennzeichnet, dass** der Kupplungsaktuator (70) einen Stellmotor (73) und einen Betätigungsarm (71) umfasst, der mit dem Kupplungspedal (43) über ein Betätigungselement (72) verbindbar ist.
